Europäisches Patentamt

European Patent Office

Office européen des brevets

(11) Publication number: **0 294 119 B2**

(12) **NEW EUROPEAN PATENT SPECIFICATION**

(45) Date of publication of the new patent specification:
08.11.95

(51) Int. Cl.⁶: **A23L 1/19**, A23L 1/187, A23D 7/00

(21) Application number: **88304843.1**

(22) Date of filing: **27.05.88**

(54) **Artificial cream.**

(30) Priority: **01.06.87 GB 8712818**

(43) Date of publication of application:
**07.12.88 Bulletin 88/49**

(45) Publication of the grant of the patent:
**08.04.92 Bulletin 92/15**

(45) Mention of the opposition decision:
**08.11.95 Bulletin 95/45**

(84) Designated Contracting States:
**AT BE CH DE ES FR GB GR IT LI NL**

(56) References cited:
EP-A- 0 229 938      EP-B- 0 109 372
DE-A- 2 263 301      GB-A- 1 066 703
GB-A- 1 232 640      GB-A- 1 350 065
GB-A- 1 500 427      GB-A- 2 014 426
US-A- 4 234 611      US-A- 4 341 811
US-B- 3 958 033

PATENT ABSTRACTS OF JAPAN, vol. 6, no.
250 (C-139)[1128], 9th December 1982; & JP -
A - 57 146 551 (TAIYOU YUSHI K.K.)
10-09-1982

(73) Proprietor: **UNILEVER PLC**
**Unilever House**
**Blackfriars**
**P.O. Box 68**
**London EC4P 4BO (GB)**

(84) Designated Contracting States:
**GB**

(73) Proprietor: **UNILEVER N.V.**
**Weena 455**
**NL-3013 AL Rotterdam (NL)**

(84) Designated Contracting States:
**BE CH DE ES FR GR IT LI NL AT**

(72) Inventor: **Assinder, Ivor**
**The Mill House**
**Mill Lane**
**Kempston**
**Beds (GB)**
Inventor: **Darling, Donald Frank**
**Danderyd Vasterviksvagen 6b**
**S-18235 Stockholm (SE)**
Inventor: **King, David Michael**
**41 Langemore Way**
**Billericay**
**Essex CM11 3BT (GB)**
Inventor: **Livermore, Martin**
**56 Aberfeldy Road**
**Westville 3630 (ZA)**

EP 0 294 119 B2

Technical memorandum TM 21-44e "The efficiency of emulsifiers in whipped topping", Grinsted Products, delivered at the International Symposium on Emulsion and foams in Food Technology, Ebeltoft, Denmark, Aprl 1973, ant at the 1973 C.I.F.S.T. Annual Conference, Vancouver, Canada.

"The production of dairy analogous products using emulsifiers, stabilizers and flavours", Society of Dairy Technology, London, October 1986, Joan Oi Si

"The role of ingredients in the formulation of whipped toppings", Food Technology, vol. 22, June 1968, 73 W.H. Knightly

Inventor: **Morrison, Anthony**
**15 Byron Crescent**
**Bedford MK40 2BD (GB)**
Inventor: **Povey, Kevin John**
**149 Caiyside**
**Fairmilehead**
**Edinburgh (GB)**

(74) Representative: **Dries, Antonius Johannes Maria et al**
**Unilever N.V. Patent Division**
**P.O. Box 137**
**NL-3130 AC Vlaardingen (NL)**

**Description**

This invention relates to artifical cream and its preparation.

Artificial creams have become generally accepted as an alternative to natural cream for reasons of economy, ease of handling, improved shelf-life and preference by some for products containing no dairy fat.

It is nevertheless difficult to emulate or even improve upon the performance of dairy cream with complete success in all the various contexts in which it is consumed. These are very varied; dairy cream may be consumed in thick or more mobile creams, or whipped to provide cake toppings or fillings or to be eaten as such. It exhibits a good and stable over-run, even when eaten in conjunction with fruit having a strong acid content. It may be used in coffee and should then be readily dispersible in the hot liquid, without exhibiting unattractive forms of dispersion known as feathering. It must also of course give a good whitening effect.

In all these characteristics and more, substitute creams must exhibit at least comparable performance to be commercially viable. In addition, artificial creams should exhibit good shelf-life. Above all, the organoleptic response they invoke should certainly be acceptable to consumers and at least comparable with that provided by dairy cream.

Like natural cream, artificial cream takes the form of aqueous dispersions of the edible fat and long shelf-life is only possible with sterile packing to prevent microbiological spoilage. The ingredients of artificial creams are also similar; butter fat and milk proteins may be present, together with partial glycerides and phophatides as emulsifiers, although artificial emulsifiers may also be necessary, even though food legislation may severely restrict the choice of these. Artificial creams may also require oxidation stabilisers eg, BHA and BHT and thickening agents, for example, gums and starches and salts eg. phosphates to provide buffer control against pH changes that can destabilise the emulsion.

PRIOR ART

Newstead and Goldmann (Int. Dairy Fed. Bull. 1979, 116 pp 1-13) described recombined cream made by reconstituting a mixture of skim milk powder (SMP) and buttermilk powder (BMP) with anhydrous milk fat (AMF), to a fat content of 20-40% limited to the range 35-40% for whipping cream and 20-25% for coffee and pouring creams, by a recombining process basically the same as for recombined pasteurised milk, with UHT sterilization and homogenisation steps. Glycerol monostearate (GMS) and Tween 60 are optionally employed as emulsifiers with carageenan as stabiliser. A typical whipping cream formula according to the this disclosure by weight % is SMP 4, BMP 5.5, AMF 40, carageenan 0.3, GMS 0.1, Tween 60, 0.3 and water to 100%.

United States Patent 3 098 748 describes edible compositions for whipping composed of edible oil, protein, sweetener and a whipping agent.

United States Patent 4 310 561 describes combining diacetyl tartaric acid (DATA) esters of mono-glycerides and polyglycerol esters (PGE) as emulsifiers in a non-protein cream substitute containing carbohydrate and substantially less fat, that exemplified being chiefly liquid vegetable oils; amounts greater than 18% are described using different emulsifiers.

In British Patent 1 080 998 a substantially anhydrous product is described composed of a fat mixture with sugar and optional flavouring constituents, for example skim milk powder.

In British Patent 1 294 426 a cream powder is described for cake fillings containing at least 25% egg and optionally milk powder and 15-35% fat component having specified melting characteristics, with a fat-soluble emulsifier, including DATA and PGE esters and polyhydroxyethylene sorbitol fatty acid esters. The fat may be hardened soya or groundnut.

In British Patent 1 232 640 a powdered emulsion is described for use as a coffee creamer, which may be reconstituted with water for whipped toppings and is composed of an edible oil, preferably a combination of palm kernel oil and coconut oil, an emulsifier, a sweetener and a protein in specified amounts. The emulsifier is composed of mono- and di-glycerides, including polyoxyethylene sorbitan monostearate.

In British Patent 1 354 294 a combination of DATA and PGE esters is described in a stabilised egg composition.

In Japanese Patent Application 61 209562, synthetic cream is described comprising 25-55% fat, protein and, as emulsifier, a combination of PGE, lecithin and DATA esters.

A mixture of polyglycerol ester with a sucrose fatty ester, diacetyl tartaric acid monoglyceride and calcium stearyl lactate is described as emulsifier in Japanese Patent 82 92395 for use in a liquid composition, and a baking release agent is described in Japanese Patent 59 006843 comprising a mixture of lecithin with a diacetyl tartaric acid monoglyceride.

In Japanese Patent 53 118405 a synthetic cream is described containing sorbitan and lecithin, sucrose ester and propylene glycol ester as emulsifier.

In Japanese Patent 53 145959 a whippable cream includes sorbitan esters and propylene glycol ester.

In United States Patent 4 107 343 a mixture of propylene glycol monostearate with a sorbitan or ethyoxylated sorbitan ester and lecithin is described for a whippable food topping.

In Japanese Patent 50 19885 a whipping cream is described comprising 25-55% fat, eg coconut or palm kernel oil and 0.5-6% of protein and emulsifier composed of 0.01-1% polyglycerol fatty acid ester, 0.05-0.5% lecithin and 0.05-0.5% diacetyl tartaric acid monoglyceride, which after emulsifying the fat is sterilised by ultra high temperature heating.

A cream is described in Japanese Patent 54 020010 comprising as fat, eg coconut oil or butter and an emulsifier, eg ester of glycerol, sorbitan, propylene glycol or sucrose.

A similar combination is described in Japanese Patent 55 034052 as emulsifier in a cream having a fat with specified index values, eg coconut oil and including skim milk and sodium caseinate.

In United States Patent 4 208 444 a whippable topping is described in which the fat exhibits specified SFI values.

German Patent 3 042 614 describes the preparation of whipping toppings by adding a thickening agent, eg cellulose derivative and/or gum to milk and adding fats and emulsifiers to a high protein fraction thereof.

A pasteurised coffee whitener is described in US Patent 4 341 811 comprising 6-15% fat with partial glycerol, propylene glycol or polyglycerol esters.

United States Patent 4 505 943 describes a whipped topping containing 10-30% of both non-milk and milk fat, protein, gum stabiliser, emulsifier and sweetening, with 35-65% water which is pasteurised, homogenised, whipped and aerated.

## GENERAL DESCRIPTION OF THE INVENTION

It has now been found that particular attention must paid to the solids content profile of the fat component in artificial creams to provide a satisfactory product, which is not apparent from studies of the butter fat in dairy cream nor in the compositions hitherto proposed as substitutes therefor.

The present invention provides an artificial liquid cream comprising a dispersion of 10-40 wt%, based on the whole composition of edible fat in an aqueous phase, one or more emulsifiers and protein, wherein the fat comprises vegetable butter or lauric fat having a solids content at 35°C at most 5%, and at 25°C of at least 5% whereas the solid content at 15°C is at least 50% more than the solid content at 25°C, while the fat phase also contains butter fat, in an effective amount to minimize poshardening, and up to an amount that corresponds with an amount of butter of up to one third of the fat phase whereas the cream does not contain more than 20 wt% of a starch and/or hydrolyzed starch. The fat preferably comprises a mixture of coconut oil and substantially saturated palm kernel fat. The fat composition should be selected to provide for a degree of stability of the emulsion which is appropriate at the temperatures at which the composition is stored and used, and in particular for stability at high ambient temperature and during whipping, while ensuring that in consumption the minimum element of waxiness in oral response is experienced. To this end the melting range of fat composition should preferably meet the following requirements :

(a) At 35°C and above, minimum solids remaining to avoid a waxy oral response, in any event not more than 5%

(b) At 25°C a solids content of a minimum 5%, preferably 5-10%, to provide high stability in whipping, and

(c) At 15°C a minimum of 50% solids additional to that at 25°C.

The solids contents figures referred to herein relate to date obtained by NMR using standard pulse methods.

The palm kernel constituent of the fatty dispersion in the preferred artificial creams of the present invention may be obtained by hydrogenation from palm kernel oil, or by fractionating the oil to remove unsaturated components in a lower-melting fraction. The precise proportion of the two lauric fats is a matter for trial and error, according to the precise organoleptic response required. At least 20% of ether fat should be present in the mixture of the two. In particular coconut oil and hydrogenated vegetable oil are used in proportions from 1:3 to 3:1.

Coconut oil present in the compositions of the invention may be provided from whole coconut oil or from fractions thereof, but is essentially unsaturated, with an iodine value of at least 6, whereas the palm kernel fat is substantially saturated with an iodine value of not more than 5 and preferably not more than 2. The amount of fat in the creams of the present invention may be varied from 10 to 40%, and is preferably from at least 30%. Any butter present is preferably not more than one third the total amount of fat its presence improves organoleptic response, particularly by minimising post-hardening effects.

Vegetable butters used in the present invention include palm oil, shea and sal fat and their fractions and hardened derivatives and blends thereof. Lauric fats include chiefly coconut oil and palm kernel oil.

Protein is present in the compositions of the invention, preferably in an amount from 0.5 to 50% by weight of protein of the composition. It may be provided by milk proteins for example, sodium caseinate or buttermilk or buttermilk powder in the form of liquid or powder.

Thickening agents may be present to promote the stability of the emulsion and suitable agents include gums eg, xanthan, locust bean gum, xanthan and carageenan or cellulose derivatives. These stabilisers are in widespread use in artificial creams and the amounts that may be present may be varied to 0.5, preferably from 0.02 to 0.2%, particularly 0.05 to 0.15%.

Emulsifiers which may be present include phosphatides for example, lecithin, partial glycerides, preferably of saturated $C_{16}/C_{18}$ fatty acids, propylene glycol mono fatty acid esters of saturated $C_{16}/C_{18}$ fatty acids, esters of lactylated polyhydroxy short-chain fatty acid esters, mono-stearates and di-stearates of polyhydric alcohols such as sorbitan, and polyoxyalkylene ethers of such esters. Combinations of such emulsifiers may be used eg. a mixture of polyglycerol esters of fatty acids, particularly of saturated acids with 16 to 22 carbon atoms, with diacetyl tartaric esters of monoglycerides of such acids. These are preferably combined in proportions from 2:1 to 5:1 by weight. The choice of emulsifiers to give the best results may depend on the fat contents. Thus, with low fat creams containing approximately 25% or less fat, a mixture of lecithin and fatty acid monoglycerides is suitable. For middle fat creams containing 25-30% fat a mixture of lactic acid ester monoglyceride and sodium casineate is more suitable and for higher fat content (35-40% fat) a mixture of polyglyceride with saturated and unsaturated fatty acid esters or with diacetyl tartaric esters of monoglycerides in the above proportions is preferred. Saturated polyglyceride esters alone or with lecithin are also suitable for 25-40% fat content.

In general, there may be present up to 50% fat and 4% protein equivalent to 12% milk powder. Sugar may be present to taste, preferably up to 20% and may be additionally used with polyoxyethylene sorbitol esters. Lecithin and monoglycerides may be combined, and caseinate with lactic acid ester monoglycerides. Water content should preferably be from 40 to 70%, with preferably more water than fat.

The invention further provides a process for the preparation of artificial cream comprising blending a mixture of lauric fats or vegetable butters in proportions providing a solids content at 35°C of at most 5%, at 25°C of at least 5% and at 15°C of at least 50%, greater emulsifying the fat in an aqueous phase with a protein source and an emulsifier in proportions providing from 40-70% water, pasteurising and cooling and packaging under aseptic conditions.

Example

An aqueous fat dispersion was made by mixing the following ingredients at 50°C. Solids content as N values by NMR:

|  | Weight % | N15:N25:N35 |
|---|---|---|
| Hydrogenated Palm Kernel Oil (slip MPt 38°C) | 7.5 ) | ca 60 : 25 : 2 |
| Coconut Oil | 17.5 ) |  |
| Butterfat | 10.0 |  |
| Buttermilk Powder | 7.0 |  |
| "TWEEN" 60 (polyoxyethylene sorbitan mono-stearate) | 0.35 |  |
| Guar | 0.1 |  |
| Carotene (2% Carotene) | 0.25 |  |
| Water | 57.3 |  |

5

The emulsion was then subjected to pasteurisation by steam injection at 150°C, cooled in two stages successively by flash evaporation by calandria effect and then to 50°C by means of plate heat exchangers with cold water. The emulsion was then homogenized while still at 50°C, first at 6.9 $N/M^2$ and then at 3.45 $N/m^2$.

Finally, the homogenised cream was cooled under aseptic conditions and pour-filled under similar conditions, into hygienic containers which were then sealed.

Storage tests carried out on the packed cream showed that taste and flavour remained excellent for several weeks at chilled temperature (ca 5°C) and that over-run remained good at about 150%. On dispersion in hot coffee the cream showed no feathering.

In otherwise similar embodiments, the fat content was maintained, but with a changed composition omitting butter fat, by maintaining the hardened palm kernel oil content at 12% and either increasing the coconut oil content to 22% as the only additional fat, or by adding a mixture of 17.5% coconut oil and 5% edible tallow. In yet another embodiment lauric fats are replaced by a mixture of palm oil fractions with suitable solids content.

## Claims

1. An artificial liquid cream, comprising a dispersion of 10-40 wt%, based on the whole composition of edible fat in an aqueous phase, one or more emulsifiers and protein, wherein the fat comprises lauric fat or vegetable butter having a solids content at 35°C of at most 5% and at 25°C of at least 5%, whereas the solid content at 15°C is at least 50% more than the solid content at 25°C, while the fat phase also contains butterfat, in an effective amount to minimize posthardening, and up to an amount that corresponds with an amount of butter of up to one third of the fat phase, whereas the cream does not contain more than 20 wt% of a starch and/or hydrolyzed starch.

2. A composition as claimed in claim 1 wherein the vegetable butter comprises saturated palm kernel oil or a fraction thereof.

3. A composition as claimed in any of the preceding claims wherein the fat comprises coconut oil and hydrogenerated vegetable oil in a weight ratio of 1:3 to 3:1.

4. Composition as claimed in any of the preceding claims which includes buttermilk or buttermilk powder.

5. Composition according to claim 1 which includes a monoglyceride emulsifier.

6. Compositions as claimed in claims 1-4 which contains as emulsifier polyoxy ethylene sorbitol fatty acid ester.

7. Composition as claimed in claims 1-4 which comprises as emulsifier polyglycerol ester(s) of saturated or unsaturated fatty acid, diacetyl tartaric ester of fatty acid glycerol monoester, a lactic acid ester of a monoglyceride, lecithin and/or a monoglyceride of a fatty acid ester.

8. Composition as claimed in claim 7 comprising 25 wt% or less fat and as emulsifier lecithin and a monoglyceride of a fatty acid.

9. Composition as claimed in claim 7 comprising 25-30 wt% fat and as emulsifier lactic acid ester of monoglyceride of a fatty acid and sodium caseinate.

10. Composition as claimed in claim 7 comprising 35-40 wt% fat and as emulsifier polyglycerol saturated fatty acid ester per se or with diacetyl tartaric acid ester of fatty acid glycerol mono ester.

## Patentansprüche

1. Künstliche flüssige Creme, die eine Dispersion aus 10 bis 40 Gew.-%, bezogen auf die gesamte Zusammensetzung, eßbarem Fett in einer wäßrigen Phase, einem oder mehreren Emulgatoren und Protein umfaßt, worin das Fett Laurinfett oder pflanzliche Butter mit einem Feststoffgehalt von höchstens 5 % bei 35°C und von mindestens 5 % bei 25°C umfaßt, während der Feststoffgehalt bei 15°C mindestens 50 % größer als der Feststoffgehalt bei 25°C ist, wobei die Fettphase auch Butterfett in einer zum Minimieren einer Nachhärtung wirksamen Menge und bis zu einer Menge enthält, die einer Menge an Butter von bis zu einem Drittel der Fettphase entspricht, während die Creme nicht mehr als 20 Gew.-% einer Stärke und/oder hydrolysierten Stärke enthält.

2. Zusammensetzung nach Anspruch 1, in welcher die pflanzliche Butter gesättigtes Palmkernöl oder eine Fraktion davon umfaßt.

3. Zusammensetzung nach einem der vorhergehenden Ansprüche, in welcher das Fett Kokosnußöl und hydriertes pflanzliches Öl in einem Gewichtsverhältnis von 1:3 bis 3:1 umfaßt.

4. Zusammensetzung nach einem der vorhergehenden Ansprüche, die Buttermilch oder Buttermilchpulver einschließt.

5. Zusammensetzung nach Anspruch 1, die einen Monoglyceridemulgator einschließt.

6. Zusammensetzung nach den Ansprüchen 1 bis 4, die als Emulgator einen Polyoxyethylensorbitolfettsäureester enthält.

7. Zusammensetzung nach den Ansprüchen 1 bis 4, die als Emulgator einen oder mehrere Polyglycerolester gesättigter oder ungesättigter Fettsäuren, Diacetylweinsäureester von Fettsäureglycerolmonoestern,einen Milchsäureester eines Monoglycerids, Lecithin und/oder ein Monoglycerid eines Fettsäureesters umfaßt.

8. Zusammensetzung nach Anspruch 7, die 25 Gew.-% oder weniger Fett und als Emulgator Lecithin und ein Monoglycerid einer Fettsäure umfaßt.

9. Zusammensetzung nach Anspruch 7, die 25 bis 30 Gew.-% Fett und als Emulgator den Milchsäureester eines Monoglycerids einer Fettsäure und Natriumcaseinat umfaßt.

10. Zusammensetzung nach Anspruch 7, die 35 bis 40 Gew.-% Fett und als Emulgator Polyglycerolester gesättigter Fettsäuren per se oder mit Diacetylweinsäureester von Fettsäuredlycerolmonoester umfaßt.

**Revendications**

1. Crème liquide artificielle comprenant une dispersion de 10 à 40% en poids, sur la base de la composition entière, de matière grasse comestible dans une phase aqueuse, un ou plusieurs émulsifiants et des protéines, dans laquelle la matière grasse comprend de la matière grasse laurique ou du beurre végétal ayant une teneur en solides, à 35°C d'au plus 5%, et à 25°C d'au moins 5%, tandis que la teneur en solides à 15°C est d'au moins 50% supérieure à la teneur en solides à 25°C, tandis que la phase grasse contient également de la graisse de beurre en une quantité efficace pour réduire au minimum le postdurcissement, et jusqu'à une quantité qui correspond à une quantité de beurre allant jusqu'à un tiers de la phase grasse, tandis que la crème ne contient pas plus de 25% en poids d'un amidon et/ou d'un amidon hydrolysé.

2. Composition selon la revendication 1, dans laquelle l'huile végétale comprend de l'huile de palmiste saturée ou une de ses fractions.

3. Composition selon l'une quelconque des revendications précédentes dans laquelle la matière grasse comprend de l'huile de coco et de l'huile végétale hydrogénée dans un rapport pondéral de 1:3 à 3:1.

4. Composition selon l'une quelconque des revendications précédentes qui inclut du babeurre ou de la poudre de babeurre.

5. Composition selon la revendication 1, qui inclut un émulsifiant monoglycéride.

6. Compositions selon les revendications 1-4, qui contient comme émulsifiant un ester d'acide gras de polyoxyéthylène sorbitol.

**7.** Composition selon les revendications 1-4, qui comprend comme émulsifiant un ou plusieurs esters de polyglycérol d'acides gras saturés ou insaturés, l'ester diacétyl tartrique de monoester d'acides gras-glycérol, un ester d'acide lactique d'un monoglycéride, de la lécithine et/ou un monoglycéride d'un ester d'acide gras.

**8.** Composition selon la revendication 7, comprenant 25% en poids ou moins de matière grasse et, comme émulsifiant de la lécithine et un monoglycéride d'un acide gras.

**9.** Composition selon la revendication 7, comprenant de 25 à 30% en poids de matière grasse, et comme émulsifiant un ester d'acide lactique de monoglycéride d'un acide gras et de caséinate de sodium.

**10.** Composition selon la revendication 7, comprenant de 35 à 40% en poids de matière gras, et, comme émulsifiant, un ester d'acide gras saturé en polyglycérol en tant que tel ou avec un ester d'acide diacétyl tartrique de monoester de glycérol d'acide gras.